## Europäisches Patentamt
## European Patent Office
## Office européen des brevets

(11) Publication number: **0 107 317**
**A1**

(12) **EUROPEAN PATENT APPLICATION**

(21) Application number: **83305342.4**

(22) Date of filing: **13.09.83**

(51) Int. Cl.³: **H 02 K 21/08, H 02 K 1/24**

(30) Priority: **27.09.82 JP 166698/82**

(43) Date of publication of application: **02.05.84**
Bulletin 84/18

(84) Designated Contracting States: **DE FR GB**

(71) Applicant: **FANUC LTD, 5-1, Asahigaoka 3-chome Hino-shi, Tokyo 191 (JP)**

(72) Inventor: **Kawada, Shigeki, 346-15, Shimoda, Hino-shi Tokyo (JP)**
Inventor: **Amemiya, Yoichi, 1019-357, Nishiterakata-cho, Hachioji-shi Tokyo (JP)**
Inventor: **Sogabe, Masatoyo, 5-20-6, Sandamachi, Hachioji-shi Tokyo (JP)**
Inventor: **Iwamatsu, Noboru, 3-27, Tamadaira, Hino-shi Tokyo (JP)**
Inventor: **Okuda, Kanemasa, 3-27, Tamadaira, Hino-shi Tokyo (JP)**

(74) Representative: **Allman, Peter John et al, Marks and Clerk Scottish Life House Bridge Street, Manchester M3 3DP (GB)**

(54) **A permanent magnet field type rotor structure for an electric machine.**

(57) A rotor comprising a shaft (9), end plates (5, 6), and radially disposed permanent magnets (1) and yokes (2) arranged in alternation. The yokes (2) consist of a plurality of stacked sheets. The yokes (2) and the magnets (1) are separated along a plane perpendicular to the shaft axis. An intermediate, non-magnetic plate (4) is interposed between the separated components. Bolts (7) extend through the sheet yoke (2) and the intermediate plate (4) thereby preventing expansion of the bolts (7) and sheet yokes (2).

A PERMANENT MAGNET FIELD TYPE
ROTOR STRUCTURE FOR AN ELECTRIC MACHINE

BACKGROUND OF THE INVENTION

Field of the Invention

The present invention relates to an electric machine, and more particularly to a permanent magnet field type rotor structure for an electric machine.

Description of the Prior Art

A permanent magnet field type rotor is often used in an electric synchronous motor or the like. The permanent magnet field type rotor has yokes for supporting the magnets and defining pole surfaces. Each yoke is formed of either one-piece solid or a stack of blanked sheets. When using yokes consisting of stacked sheets bolted therethrough, these tend to expand radially outward together with the bolts upon rotation of the rotor. This expansion may not be great enough to damage the rotor, but may generate undesirable changes in the magnetic flux distribution.

SUMMARY OF THE INVENTION

It is an object of the invention to provide a permanent magnet field type rotor structure of simple design and superior rigidity.

According to the invention, there is provided a permanent magnet field type rotor structure for an electric machine comprising a shaft; a pair of axially spaced end plates secured to the shaft; a plurality of permanent magnets each extending radially outward from the shaft and extending axially between the end plates; a plurality of yokes each arranged between the adjacent magnets and axially extending between the end plates for supporting the magnets, each of the yokes consisting of a plurality of axially stacked sheets and having a hole extending axially therethrough; a plurality of rod means each of which extends through the hole of the corre-

- 2 -                    0107317

sponding yoke, the opposite ends of said rods being secured to the end plates; and means arranged between the end plates for holding together all the rod means to prevent the same from expanding radially outward.

BRIEF DESCRIPTION OF THE DRAWINGS

The invention will be more fully understood from the following description of the preferred embodiments of the invention in connection with the attached drawings, in which:

Fig. 1 is a front view of a permanent magnet field type rotor according to the invention;

Fig. 2 is a section of the rotor taken along line A-A of Fig. 1; and

Fig. 3 is a section of the rotor taken along line B-B of Fig. 1.

DESCRIPTION OF THE PREFERRED EMBODIMENT

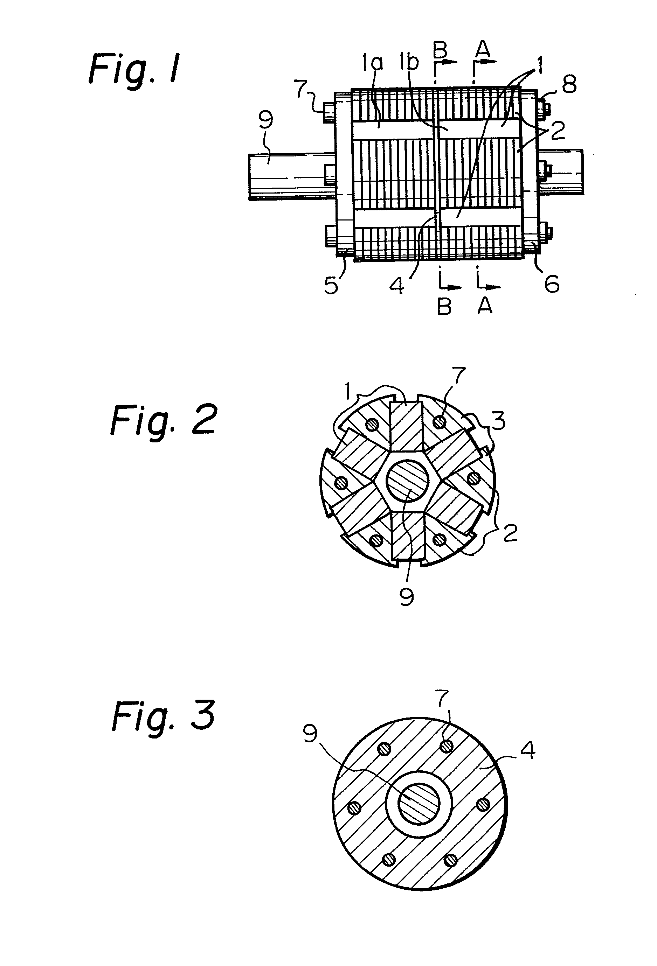

Referring to Figs. 1 to 3, a permanent magnet field type rotor according to the invention comprises permanent magnets 1 and yokes 2. As is best shown in Fig. 2, the magnets 1 and the yokes 2 extend radially outward from a shaft 9 in alternation. The yokes 2, as is well known, support the magnets 1 and define the pole surfaces which project outwardly from the outer surfaces of the magnets 1. Pole shoes 3 extending from either outward edge of the yokes 2 along their entire lengths overlap the outer surfaces of the magnets 1, each of which is rectanglar in cross-section. The magnets 1 and yokes 2 come into close contact with each other. The apex of each yoke 2 meets the inside corners of the adjacent magnets 1.

As shown in Fig. 1, each of the yokes 2 consists of a plurality of blanked sheets that are stacked axially with respect to the rotor shaft 9. Each of the permanent magnets 1 comprises two magnet elements 1a and 1b separated along a plane generally perpendicular to the shaft axis. Each of the sheet yokes 2 can be separated along the same plane. A non-magnetic intermediate plate 4, such as stainless steel plate, is interposed between the separated magnets 1 and yokes 2. The intermediate plate 4 is circular, with a diameter substantially equal to that of the circle defined by the arcs of the segmental yokes. The intermediate plate 4 has a center hole through which the shaft 9 passes. The intermediate plate 4 further has holes at positions corresponding to holes provided in the radially arranged yokes 2 for passing through bolts 7.

A pair of axially spaced end plates 5 and 6 are secured to the shaft 9. The assembly comprising the permanent magnets 1, the yokes 2, and the intermediate plate 4 is secured to the end plates 5 and 6 by bolts 7 which extend through the holes in yokes 2, intermediate plate 4, and nuts 8. All the components of the rotor are in this way interconnected to each other to ensure the rigidity of the assembly.

The rigid intermediate plate 4 holds the bolts 7 which integrally bind together the sheets making up each of the yokes 2, thereby preventing the expansion of the bolts 7 and the sheet yokes 2 due to centrifugal force uopn rotation of the rotor. The non-magnetic intermediate plate 4 does not affect the predetermined magnetic flux distribution. Outward movement of the permanent magnets 1 is prevented by the pole shoes 3 of the yokes 2. The friction between the yokes 2 and the magnets 1 due to their close contact holds the permanent magnets 1 in position.

The pole assembly comprising the magnets 1, the yokes 2, and the intermediate plate 4 can be impregnated with an adhesive solution and dried prior to insertion of the assembly over the shaft 9. This also aids the securing of the magnets 1 to the yokes 2. In addition, elastic insertions may be interposed between the shaft 9 and the inner surfaces of magnets 1 to prevent the magnets from moving inwards.

CLAIMS

1.    A permanent magnet field type rotor structure for an electric machine comprising:

a shaft;

a pair of axially spaced end plates secured to the shaft;

a plurality of permanent magnets each extending radially outward from the shaft and extending axially between the end plates;

a plurality of yokes each arranged between the adjacent magnets and axially extending between the end plates for supporting the magnets, each of said yokes consisting of a plurality of axially stacked sheets and having a hole extending axially therethrough;

a plurality of rod means each of which extends through the hole of the corresponding yoke, the opposite ends of said rods being secured to the end plates; and,

means arranged between the end plates for holding together all the rod means to prevent the same from expanding radially outward.

2.    A rotor structure according to claim 1, wherein said magnets and said yokes are separated along a plane generally perpendicular to the axis of the shaft, and said holding means comprises at least one non-magnetic intermediate plate which is interposed between said separated magnets and said separated yokes, said intermediate plate having holes through which said rod means extend.

3.    A rotor structure according to claim 2, wherein said rod means are bolts.

4.    A rotor structure according to claim 3, wherein the magnets, the yokes, and the intermediate plate define an assembly which is treated by an impregnation.

5.    A rotor structure according to claim 3,

0107317

wherein an insertion is placed between each of the magnets and the shaft.

6. A rotor structure according to claim 5, wherein said insertion is elastic.

7. A rotor structure according to claim 3, wherein each of the magnets is rectangular in cross-section, each of the yokes, when viewed in cross-section, is a radial segment with pole shoes that overlap the outer surfaces of the rectangular magnets, and the intermediate plate is circular with a center hole through which passes the shaft.

8. A rotor structure according to claim 7, wherein the diameter of the intermediate plate is substantially equal to that of the circle defined by the arcs of the segmental yokes.

9. A rotor structure according to claim 7, wherein the apex of the segmental yokes meet the inside corners of the adjacent rectangular magnets.

0107317

## Fig. 1

## Fig. 2

## Fig. 3

European Patent Office

**EUROPEAN SEARCH REPORT**

Application number

EP 83 30 5342

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 608 421 (SIEMENS)<br><br>* Pages 1-4; figures 1-5 * | 1-3,5, 7,8 | H 02 K 21/08<br>H 02 K 1/24 |
| Y | GB-A- 495 813 (BOHLI)<br><br>* Page 1, line 46 - page 2, line 17; figures 1-6 * | 1,2,5, 8 | |
| Y | US-A-2 754 440 (BRAINARD)<br>* Column 2, line 65 - column 4, line 40; figures 2-4 * | 1-3,8 | |
| A | US-A-1 543 347 (TURNER et al.)<br>* Page 3, lines 47-57; figures 15-17 * | 1,2,8 | |
| | | | TECHNICAL FIELDS SEARCHED (Int. Cl. 3) |
| A | US-A-2 680 822 (BRAINARD)<br><br>* Column 2, lines 1-57; column 6, line 4 - column 7, line 5; figures 1-8 * | 1,2,5, 6,8 | H 02 K |
| A | US-A-3 221 194 (BLACKBURN)<br>* Column 1, line 54 - column 2, line 41; figures 1-3 * | 1,4,5 | |
| | ---     -/- | | |

The present search report has been drawn up for all claims

| Place of search | Date of completion of the search | Examiner |
|---|---|---|
| THE HAGUE | 16-12-1983 | TIO K.H. |

0107317

**European Patent Office**

**EUROPEAN SEARCH REPORT**

Application number

EP 83 30 5342

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| A | FR-A-1 317 744 (SIEMENS-SCHUCKERT) * Page 1, right-hand column, line 7 - page 2, left-hand column, line 18; figures 1,2 * | 3,9 | |
| A | FR-A-1 150 327 (WIPAC) * Page 2, left-hand column, lines 13-44; figures 1-4 * | 7 | |
| A | PATENTS ABSTRACTS OF JAPAN, vol. 2, no. 120, 6th October 1978, page 7008 E 78 & JP - A - 53 86 405 (MATSUSHITA DENKO K.K.) 29-07-1978 * Abstract; figures * | 6 | |
| | | | TECHNICAL FIELDS SEARCHED (Int. Cl. 3) |

The present search report has been drawn up for all claims

| Place of search THE HAGUE | Date of completion of the search 16-12-1983 | Examiner TIO K.H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82